# EUROPEAN PATENT APPLICATION

(11) **EP 4 462 207 A1**
(43) Date of publication of application: **13.11.2024**
(21) Application number: 24170461.8
(22) Date of filing: 16.04.2024
(51) Int. Cl.: G05B 19/4097

(54) **SYSTEMS AND METHODS FOR GENERATING AND MAPPING OF NUMERICALLY CONTROLLED TOOL PATHS IN DESIGN APPLICATIONS**

(30) Priority: 10.05.2023 US 202318315050
(71) Applicant: General Electric Technology GmbH, 5400 Baden (CH)
(72) Inventor: YIGIT, Gunes Avni, 41400 Gebze (TR)
(74) Representative: Freigutpartners IP Law Firm

(57) **Abstract**

A method for generating tool paths across a surface of a computer aided design (CAD) model having a complex shape. The method includes defining at least one reference point on the surface of the CAD model, generating a plurality of substantially equi-spaced reference points across the surface of the CAD model; connecting each of the reference points together with straight lines such that a first tool path is formed by a culmination of the straight lines; generating a second tool path across the surface of the CAD model; and, generating a plurality of intermediate tool paths that extend linearly between the first tool path and second tool path across the surface of a CAD model.

## Description

### BACKGROUND

The present application relates generally to systems and methods for generating and mapping of computer numerically controlled (CNC) tool paths in computer aided design (CAD) applications and more particularly, to systems and methods for generating and mapping of CNC tool paths across complex three-dimensional shapes.

Computer numerical control systems enable automated control of robotic machining tools and processing tools by computer aided design applications. Generally, a CNC system includes at least one motorized robotic arm and a tool head that is communicatively coupled to, and controlled by, a processor. The processor transmits instructions to manipulate the tool head in at least three degrees of freedom, including linear and axial translation along an X-axis, a Y-axis, and/or a Z-axis by executing coded programmed instructions stored in memory. The coded programmed instructions are commonly generated by graphical computer-aided design (CAD) or computer-aided manufacturing (CAM) systems and applications.

CAD and CAM systems are commonly used to generate a three-dimensional geometric model of an object or shape. Within a graphical user interface of the CAD/CAM application, a user can manipulate the model and generate tool pathing on a surface of the model with the aid of the application. The graphical representation of the tool paths are then converted by the CAD/CAM application into vectors having cartesian coordinates. The vectors and the distances between vectors are then stored as instructions in memory that are transmitted to the motorized robotic arm to cause the tool head along the path. The conversion process can be computationally intensive for objects that are complex and/or for shapes that require intricate and detailed tool paths.

One approach to reduce the computational power for complex shapes is to manually input limiting parameters and/or to reduce the resolution of tool pathing generated by the CAD/CAM application. However, such solutions may be inconsistent as user input may result in inadvertent errors, and such solutions may be time-consuming and/or tedious on part of the user. In addition, errors may result because the lack of resolution may necessitate the need for approximation. Therefore, there is a need in the art to improve tool path generation for use with CAD and CAM systems in a manner that facilitates reducing computational time.

### SUMMARY

In one aspect, a method for generating tool paths across a surface of a computer aided design (CAD) model having a complex surface is disclosed. The method includes defining at least one reference point on the surface of the CAD model, generating a plurality of substantially equi-spaced reference points across the surface of the CAD model; connecting each of the reference points together with straight lines such that a first tool path is formed by a culmination of the straight lines; generating a second tool path across the surface of the CAD model; and, generating a plurality of intermediate tool paths that extend linearly between the first tool path and second tool path across the surface of a CAD model.

In another aspect, a system for generating tool paths across a surface of a computer aided design (CAD) model having a complex shape is disclosed. The system includes a user input; a media output; and, a processor connected to the user input and media output, wherein in response to a user defining at least one reference point on the surface of the CAD model. The processor is programmed to: generate a plurality of substantially equi-spaced reference points across the surface of the CAD model; connect each of the reference points together with straight lines such that a first tool path is formed by a culmination of the straight lines; generate a second tool path across the surface of the CAD model; and, generate a plurality of intermediate tool paths that extend linearly between the first tool path and second tool path across the surface of a CAD model.

In yet another aspect, a computer implemented method for generating tool paths across a surface of a computer aided design (CAD) model having a complex shape is disclosed. The computer implemented method includes defining, by a user, at least one reference point on the surface of the CAD model; generating, by a processor, a plurality of substantially equi-spaced reference points across the surface of the CAD model; connecting, by the processor, each of the reference points together with straight lines such that a first tool path is formed by a culmination of the straight lines; generating, by the user, a second tool path across the surface of the CAD model; and, generating, by the processor, a plurality of intermediate tool paths that extend linearly between the first tool path and the second tool paths across the surface of a CAD model.

### BRIEF DESCRIPTION OF THE DRAWINGS

The subj ect-matter of the disclosure will be explained in more detail in the following text with reference to exemplary embodiments that are illustrated in the attached drawings.
FIG. 1 is a schematic diagram of an exemplary computer processing system including an input device and an output device;
FIGS. 2A and 2B are a block diagram illustrating an exemplary method for generating a tool path on an arbitrary region or a surface of a solid computer model, in accordance with an embodiment of the disclosure;
FIG. 3 is a perspective view of a computer model of an exemplary work piece in accordance with one or more embodiments of the present disclosure;
FIG. 4 is a top view of the computer model shown in FIG. 3;
FIG. 5 is a perspective view of an exemplary target region representing a surface area of the work piece shown in FIG. 3;
FIGS. 6 and 7 are perspective views of exemplary parallel tool paths defined along the target region shown in FIG. 5;
FIG. 8 is a perspective view of exemplary generated parallel tool paths defined along the target region shown in FIG. 5;
FIG. 9 is a perspective view of exemplary generated approach tool paths and retreat tool paths along the target region shown in FIG. 5;
FIG. 10 is a perspective view of exemplary perpendicular tool paths defined along the target region shown in FIG. 5;
FIG. 11 is a perspective view of exemplary generated perpendicular tool paths defined along the target region shown in FIG. 5;
FIG. 12 is a perspective view of exemplary generated approach tool paths and retreat tool paths along the target region shown in FIG. 5;
FIG. 13 is a perspective view of parallel reference points for generating perpendicular tool paths; and,
FIG. 14 is a perspective view of perpendicular tool paths generated from the parallel reference points.

The reference symbols used in the drawings, and their meanings, are listed in summary form in the list of reference symbols. In principle, identical parts are provided with the same reference symbols in the figures.

### DETAILED DESCRIPTION

In the following specification and the claims, reference will be made to a number of terms, which shall be defined to have the following meanings.

As used herein, the singular forms "a," "an," and "the" include plural references unless the context clearly dictates otherwise. The terms "comprising," "including," and "having" are intended to be inclusive and mean that there may be additional elements other than the listed elements. The terms "optional" or "optionally" means that the subsequently described event or circumstance may or may not occur, and that the description includes instances where the event occurs and instances where it does not.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms, such as "about," "approximately," and "substantially," is not to be limited to the precise value specified. In at least some instances, the approximating language may correspond to the precision of an instrument for measuring the value. Here and throughout the specification and claims, range limitations may be identified. Such ranges may be combined and/or interchanged and include all the sub-ranges contained therein unless context or language indicates otherwise.

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

In one embodiment, a computer program is provided, and the program is embodied on a computer readable medium. In the exemplary embodiment, the system is executed on a single computer system, without requiring a connection to a sever computer. In a further embodiment, the system is being run in a Windows^{®} environment (Windows is a registered trademark of Microsoft Corporation, Redmond, Washington). In yet another embodiment, the system is run on a mainframe environment and a UNIX^{®} server environment (UNIX is a registered trademark of X/Open Company Limited located in Reading, Berkshire, United Kingdom). In a further embodiment, the system is run on an iOS^{®} environment (iOS is a registered trademark of Cisco Systems, Inc. located in San Jose, CA). In yet a further embodiment, the system is run on a Mac OS^{®} environment (Mac OS is a registered trademark of Apple Inc. located in Cupertino, CA). In still yet a further embodiment, the system is run on Android^{®} OS (Android is a registered trademark of Google, Inc. of Mountain View, CA). In another embodiment, the system is executed on Linux^{®} OS (Linux is a registered trademark of Linus Torvalds of Boston, MA). The application is flexible and designed to run in various different environments without compromising any major functionality. In some embodiments, the system includes multiple components dis-tributed among a plurality of computing devices. One or more components may be in the form of computer-executable instructions embodied in a computer-readable medium.

As used herein, references to "example or exemplary embodiment" or "one embodiment" of the present disclosure are not intended to be interpreted as excluding the existence of additional embodiments that also incorporate the recited features.

As used herein, the terms "software" and "firmware" are interchangeable and include any computer program stored in memory for execution by a processor, including RAM memory, ROM memory, EPROM memory, EEPROM memory, and non-volatile RAM (NVRAM) memory. The above memory types are exemplary only, and are thus not limiting as to the types of memory usable for storage of a computer program.

As used herein, a processor may include any programmable system including systems using micro-controllers, reduced instruction set circuits (RISC), application specific integrated circuits (ASICs), logic circuits, and any other circuit or processor capable of executing the functions described herein. The above examples are exemplary only, and are thus not intended to limit in any way the definition and/or meaning of the term "processor."

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

The systems and processes are not limited to the specific embodiments described herein. In addition, components of each system and each process can be practiced independent and separate from other components and processes described herein. Each component and process also can be used in combination with other assembly packages and processes.

Known robotic arm operation in CNC fabricating and processing is controlled by CAD and/or CAM applications. Commonly, robotic arm platforms and the CAD/CAM applications that operate robotic arms are proprietary and are not compatible with other platforms. Such platforms have a pre-set array of features a user can implement within the CAD/CAM application to operate the robotic arm, however such features may be limited in the extent to which the robotic arm may be operated for more intricate and complex operations. For example, such applications may be limited in the generation of tool paths that a tool head of a robotic arm can follow across a complex object or surface of a work piece. As a tool head moves along a defined tool path, the tool head processes or machines the work piece, using for example, a rotary cutting tool, an abrasive surface finishing tool and/or a painting tool. The tool head can also include a probe or a sensor to inspect the surface of the work piece as it is moved along a defined tool path.

Conventional CAD/CAM applications dissect the primary surface area of the complex shape into a subarea (also known as cutout sections) and apply pathing algorithms to generate a tool path for the subarea. The tool paths of the subareas are then combined for generating a tool path for the primary surface area. This method is processor-intensive depending on the resolution of the subareas. To reduce the computational requirements, conventional CAD/CAM applications generally use larger subareas and interpolate the tool paths. However, less resolution may result in greater inaccuracy of the movement of the tool head across the work piece. In some instances, the user may have to modify the generated tool paths to correct errors generated as a result of the interpolations commonly relied on with the conventional method.

Embodiments of the disclosure relate generally to systems and methods for generating robot tool paths in CAD/CAM applications. The tool paths are convertible into coded programmed instructions for use in controlling operation of a CNC system having a robotic arm and a tool head (generally referred to as a "robot platform"). The systems and methods disclosed herein improve tool path generation on complex shapes of work pieces by enabling a user to selectively determine a target area of interest, selectively input outer boundaries for the tool path, and selectively input resolution parameters depending on the complexity of the shapes of work pieces.

Embodiments of the disclosure provide an advantage over existing robotic platforms which do not have the capability to generate robot tool paths on surfaces of a CAD model having complex shapes. One such known robotic platform is the FANUC^{©} robot platform by FANUC CORPORATION^{©}, which is widely used in industrial robotics for machining or processing of physical work pieces. The FANUC^{©} robot follows tool paths converted from coded programmed instructions, and the coded programmed instructions are derived from a CAD/CAM application commonly proprietary to the FANUC^{©} platform. One such CAD/CAM application is FANUC ROBOGUIDE^{©} (hereinafter referred to as the "ROBOGUIDE^{©} application").

The ROBOGUIDE^{©} application is limited in generating robot tool paths on surfaces having complex shapes on a CAD model and requires the user to manually input and select the pathing within the ROBOGUIDE^{©} application. In particular, the ROBOGUIDE^{©} application can generate robot tool paths for recognizable or non-complex surfaces which are native to the ROBOGUIDE^{©} application and stored in memory. By way of example, such recognizable or non-complex surfaces include flat surfaces, rounded surfaces formed with a constant radius, chamfered surfaces, or a surface with a roundover, and the like. A user merely has to select the recognizable surface within the ROBOGUIDE^{©} application, and robot tool paths are generated by the ROBOGUIDE^{©} application across the recognizable surface. For a selected recognizable flat surface, the ROBOGUIDE^{©} application will automatically generate the robot tool path by equally spacing guide-points along each robot tool path. For a selected recognizable curved surface, the ROBOGUIDE^{©} application will automatically generate the robot tool path, however the guide-points may not be equally spaced along each robot tool path, and the user may be required to manually correct spacing and placement of the guide-points.

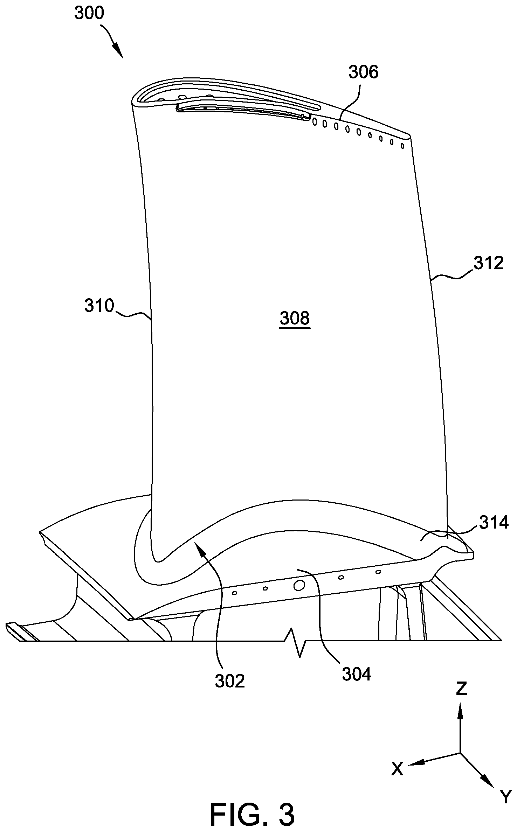

The user can also select multiple flat surfaces adj acent to one another and the ROBOGUIDE^{©} application can generate robot tool paths across the multiple flat surfaces. However, for transitions between recognizable surfaces, the user has to manually freehand the robot tool path through such transitions. The amount of manual user input substantially increases for curved surfaces that are not native to the ROBOGUIDE^{©} application. By way of example, an airfoil blade (such as the exemplary blade shown in FIG. 3) does not include flat surfaces or rounded surfaces formed with a constant radius. To generate robot tool paths across the airfoil blade of FIG. 3, the user would have to freehand and manually every reference point along multiple tool paths to adequately cover the complex surfaces. It should be understood that the FANUC^{©} robot platform and the ROBOGUIDE^{©} application is merely an example of the limitations of known CAD/CAM applications in generating complex tool paths, and is not intended to be limiting.

For the purposes of this disclosure and claims, the terms "complex shape" and "complex surfaces" shall denote any surface or shape of a CAD model which is not native to a CAD/CAM application and as such the CAD/CAM application requires manual user input to generate tool paths. Exemplary complex shapes and complex surfaces include surfaces formed with compound curvatures, airfoils, cambered shapes, parabolic shapes, hyperbolic shapes, and/or any other shape formed with complex geometries. Mathematically, complex geometries are derived from, and/or are described by algebraic functions and/or differential functions.

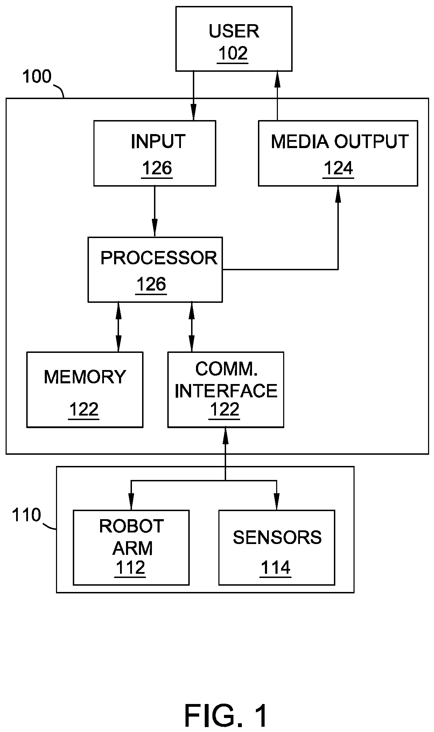

FIG. 1 illustrates an exemplary configuration of a computing device and robotic tool system and platform in accordance with one embodiment of the present disclosure. In the exemplary embodiment, computing device 100 is operated by a user 102 and is communicatively coupled to a remote device, such as robotic tool system 110. The computing device includes a processor 120 for executing instructions. In some embodiments, executable instructions are stored in a memory 122. Processor 120 may include one or more processing units (e.g., in a multi-core configuration). The memory 122 may be any device that enables information, such as executable instructions and/or transaction data to be stored and retrieved. Memory 122 may include one or more computer-readable media.

The computing device 100 also includes at least one media output component 124 that presents information to user 102. The media output component 124 may be any component capable of conveying information to user 102. In some embodiments, media output component 124 includes an output adapter (not shown) such as a video adapter and/or an audio adapter. An output adapter is operatively coupled to processor 120 and can be operatively coupled to an output device such as a display device (e.g., a cathode ray tube (CRT), liquid crystal display (LCD), light emitting diode (LED) display, or "electronic ink" display) or an audio output device (e.g., a speaker or headphones). In some embodiments, media output component 124 is configured to present a graphical user interface (e.g., a web browser and/or a client application) to user 102. A graphical user interface may include, for example, an interface for viewing the results of the analysis of one or more subject systems. In some embodiments, computing device 100 includes an input device 126 for receiving input from user 102. User 102 may use the input device 126 to, without limitation, select a computer system to view the analysis of. Input device 126 may include, for example, a keyboard, a pointing device, a mouse, a stylus, a touch sensitive panel (e.g., a touch pad or a touch screen), a gyroscope, an accelerometer, a position detector, a biometric input device, and/or an audio input device. A single component such as a touch screen may function as both an output device of media output component 124 and input device 126.

The computing device 100 may also include a communication interface 130 communicatively coupled to the robotic tool system 110. Communication interface 130 may include, for example, a wired or wireless network adapter and/or a wireless data transceiver for use with a mobile telecommunications network.

Stored in memory 122 are, for example, computer-readable instructions for providing a user interface to user 102 via media output component 124 and, optionally, receiving and processing input from input device 126. A user interface may include, among other possibilities, a web browser and/or a client application. The processor 120 executes computer-executable instructions for implementing aspects of the disclosure. In some embodiments, the processor 120 is transformed into a special purpose microprocessor by executing computer-executable instructions or by otherwise being programmed.

The robotic tool system 110 includes a robot arm 112 having a tool head that is selectably articulable along X-Y-Z axes. In the exemplary embodiment, the robotic tool system 110 also includes a plurality of sensors 114. The sensors 114 can include, but are not limited to only including, positioning sensors, optical sensors, and/or system status sensors. The robot arm 112 receives computer-executable instructions for use in implementing aspects of the disclosure from the processor 120. The sensors 114 can transmit data to the processor 120, and the processor 120 in turn may transmit additional instructions to the robot arm 112 and/or store the data in memory 122, depending on the data received.

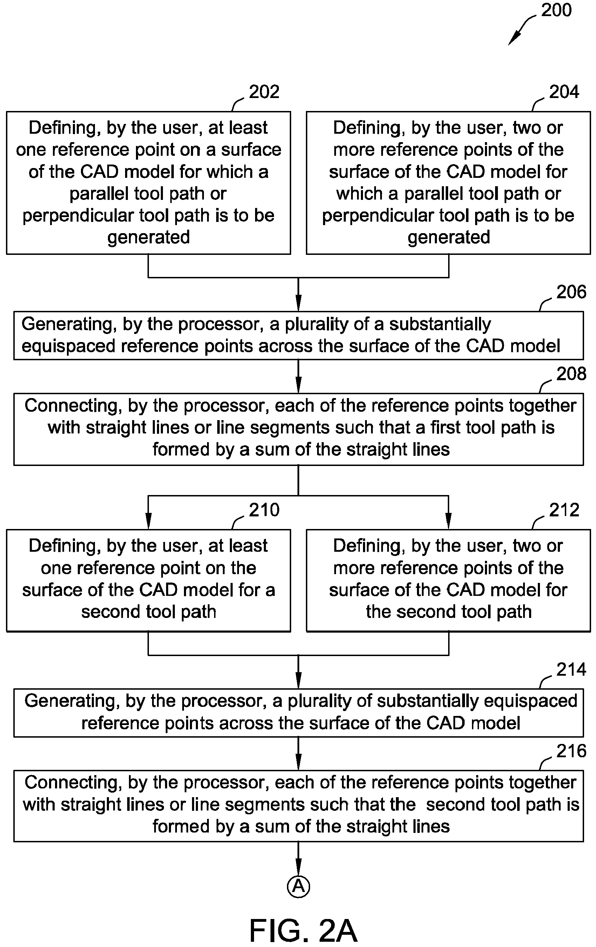

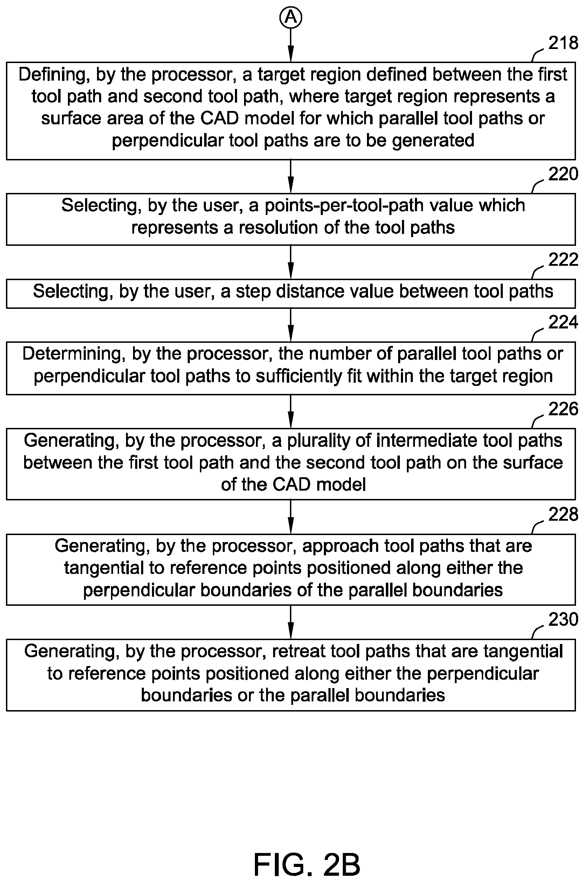

FIGS. 2A and 2B illustrate a block diagram illustrating an exemplary method 200 for use in generating a CNC tool path across a surface of a solid computer model (hereinafter referred to as a CAD model), in accordance with an embodiment of the disclosure. The method 200 is applicable to the generation of parallel tool paths or perpendicular tool paths as shown in FIGS. 3 through 12.

In some embodiments, the CAD model is created by a CAD application and is stored in memory 122. The CAD model is retrievable from memory 122 for performing the method 200. The method 200 can be executed by the processor 120 of FIG. 1 using selective inputs from the user 102 received via the input device 126. The processor 120 can output a virtual representation of the CAD model and one or more CNC tool paths via the at least one media output component 124. The method 200 can be executed as a computer-implemented method or algorithm and the algorithm can be stored in memory 122. The method 200 can be stored as an application.

The CAD model is oriented within a virtual three-dimensional space having cartesian coordinates represented as X-, Y-, and Z- axes (as best shown in FIG. 3). The term "parallel" denotes a direction along the X-axis and the term "perpendicular" denotes a direction along the Z-axis, and the robot tool pathing may be applied either horizontally or vertically. Thus, in the exemplary embodiment, a parallel tool path extends across a surface of the CAD model along the X-axis, and similarly a perpendicular tool path extends across a surface of the CAD model along the Z-axis. However, it is understood that the CAD model 300 can be arbitrarily oriented within the X-,Y-, or Z- axes.

With reference to FIG. 2, in the exemplary embodiment, the method 200 includes defining 202, by the user 102, at least one reference point on a surface of the CAD model for which a parallel tool path or perpendicular tool path is to be generated. Alternatively, in some embodiments, the method 200 further includes defining 204, by the user 102, two or more reference points on the surface of the CAD model for which a parallel tool path or perpendicular tool path is to be generated. For generation of parallel tool paths, the two or more reference points are aligned substantially parallel. For generation of perpendicular tool path, the two or more reference points are aligned substantially perpendicular.

In response to defining 202 at least one reference point by the user 102, the method 200 further includes generating 206, by the processor 120, a plurality of substantially equi-spaced reference points across the surface of the CAD model and, connecting 208, by the processor 120, each of the reference points together with straight lines or line segments such that a first tool path is formed by a sum of the straight lines. In some embodiments, the first tool path is a parallel tool path. In some embodiments, the first tool path is a perpendicular tool path.

The method 200 further includes defining 210, by the user 102, at least one reference point on the surface of the CAD model for a second tool path. Alternatively, in some embodiments, the method 200 further includes defining 212, by the user 102, two or more reference points on the surface of the CAD model for the second tool path. In response to defining 210, 212 at least one reference point by the user 102, the method 200 further includes generating 214, by the processor 120, a plurality of substantially equi-spaced reference points across the surface of the CAD model and, connecting 216, by the processor 120, each of the reference points together with straight lines or line segments such that the second tool path is formed by a sum of the straight lines. In some embodiments, where the first tool path is a parallel tool path, the second tool path is parallel to the first tool path. In some embodiments, where the first tool path is a perpendicular tool path, the second tool path is perpendicular to the first tool path.

In some embodiments, the method 200 further includes defining, 218, by the processor 120, a target region defined between the first tool path and second tool path. The target region represents a surface area of the CAD model for which parallel tool paths or perpendicular tool paths are to be generated. The target region may include one or more of: at least one corner of the surface of the CAD model, at least one edge of the surface of the CAD model, and/or a surface of the CAD model depending on the defining 202, 210 of the reference points for the first tool path and second tool path. The target region includes at least one of a substantially perpendicular oriented boundary (also referred to as "perpendicular boundaries") and a substantially parallel oriented boundary (also referred to as "parallel boundaries"). The perpendicular boundaries and the parallel boundaries substantially conform to the contours of the surface of the CAD model depending on the resolution of the tool paths as explained in further detail below. In some embodiments, the perpendicular boundaries and the parallel boundaries follow an edge or more generally the shape of the surface of the CAD model. In some embodiments, in response to a user selection, the processor 120 can output a virtual representation of the target region on the CAD model via the at least one media output component 124.

In some embodiments, the method 200 further includes selecting 220, by the user 102, a points-per-tool-path value which represents a resolution of the tool paths. To select 220 the resolution of the tool paths, the user 102 can manually input a desired numerical value for the points-per-tool-path, or the user can manually input a desired line distance between reference points. In some embodiments, the method 200 further includes selecting 222, by the user 102, a step distance value between tool paths. The step distance is defined as the distance between adjacent tool paths.

The points-per-tool-path of the tool paths (selected in step 220) and the step distance (selected in step 222) together define a resolution of the target area, and together determine the amount of reference points per tool paths and the amount of tool paths on the target region. Selecting smaller values for the points-per-tool-path of the tool paths and/or the step distance between tool paths facilitates providing a finer resolution and a more accurate approximation of the tool paths across the and surface area of the CAD model. Thus, the user 102 can preferably enter the points-per-tool-path and the step distance via the input device 126. In response to the user's selection (in steps 220 and 222), the method 200 further comprises determining 224, by the processor 120, the number of parallel tool paths or perpendicular tool paths to sufficiently fit within the target region based on the step distance. In some embodiments, to achieve an adequate resolution of the target region, a step distance of about 4mm to about 8mm is selected (in step 222) by the user 102. Likewise, a points-per-tool-path of about 0.5mm to 2mm may be selected (in step 220) by the user 105. The method 200 further includes generating 226, by the processor 120, a plurality of intermediate tool paths between the first tool path and the second tool path on the surface of the CAD model. In some embodiments, the intermediate tool paths are also generated between the parallel boundaries or the perpendicular boundaries. Each of the plurality of intermediate tool paths include reference points. In response to selection 222 of the step distance, the processor 120 spaces intermediate tool paths across the target area such that the tool paths substantially conform to the surface of the CAD model within the target region.

In some embodiments, the method 200 further comprises generating 228, by the processor 120, approach tool paths that are tangential to reference points positioned along either the perpendicular boundaries or the parallel boundaries. In particular, during the generation 226 of parallel tool paths, approach tool paths are extended from reference points positioned along the perpendicular boundaries. During the generation 226 of perpendicular tool paths, approach tool paths are extended from reference points positioned along the parallel boundaries.

In some embodiments, the method 200 further includes generating 228, by the processor 120, retreat tool paths that are tangential to reference points positioned along either the perpendicular boundaries or the parallel boundaries. In particular, in executing the method 200 for the generation (in step 226) of parallel tool paths, retreat tool paths are extended from reference points positioned along the perpendicular boundaries. Likewise, in executing the method 200 for the generation (in step 226) of perpendicular tool paths, retreat tool paths are extended from reference points positioned along the parallel boundaries.

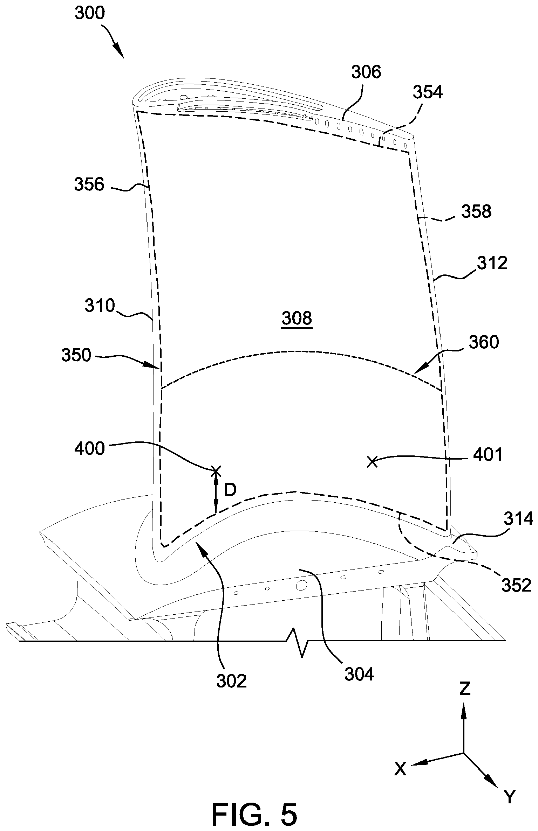

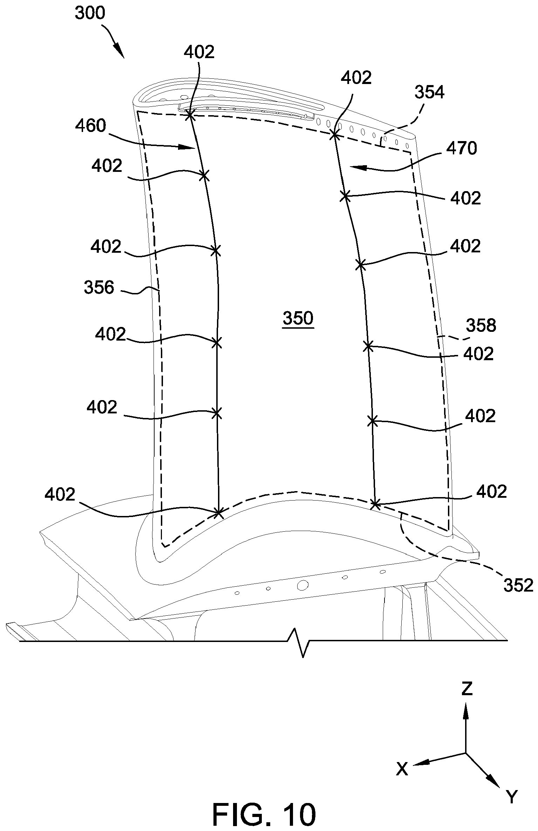

FIGS. 3 through 12 illustrate the generating of exemplary CNC robot tool paths across a surface of a CAD model 300. More specifically, FIGS. 5 through 9 illustrate the generation of parallel tool paths, and in FIGS. 10 through 12 illustrate the generation of perpendicular tool paths.

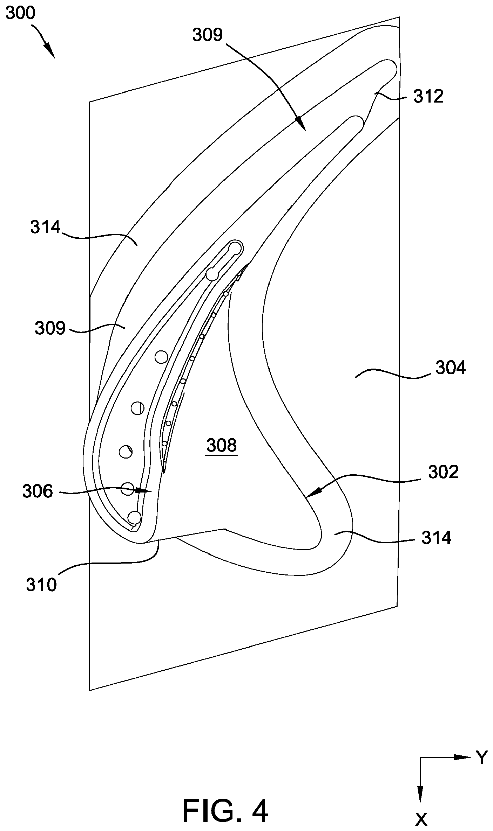

FIG. 3 illustrates a perspective view of the CAD model 300 and FIG. 4 illustrates a top view of the CAD model 300. The CAD model 300 is a virtual representation of a work piece, which in the exemplary embodiment is an airfoil blade. The CAD model 300 has a first end 302 attached to a base 304, and a cantilevered second end 306 opposite the first end 302. The CAD model 300 also includes a lower camber surface 308 and an upper camber surface 309 that is opposite the lower camber surface 308. The CAD model 300 also includes a leading edge 310, a trailing edge 312. In some embodiments, a roundover transition 314 is defined between the base 304 and the first end 302, and the roundover transition 314 follows the cambered shape of the lower camber surface 308 and the upper camber surface 309.

The airfoil blade is merely exemplary of a work piece and CAD model that includes one or more complex surfaces. The cambered shapes of the lower camber surface 308, the upper camber surface 309 and the roundover transition 314 are not recognizable by known CAD/CAM applications such as the FANUC ROBOGUIDE^{©} application, and thus require the user to manually freehand the tool path along the cambered shapes to generate each tool path. It is understood that the CAD model 300 can have any other shape or be a representation of any physical object. The CAD model 300 can be represented on the media output component 124 and can be manipulated in a virtual space by the user 102 with the use of a virtual CAD application and the input device 126. The CAD model 300 may be obtained via any known generation method and/or using any known device suitable to create the desired end purpose, including such as, being created as a result of a design process and/or from an archive of component models stored in memory 122. The CAD model 300 may also be imported from another CAD system through any conventional data exchange protocols.

FIG. 5 illustrates a target region 350 overlayed on the lower camber surface 308 of the CAD model 300. The target region 350 represents a desired surface area of the CAD model 300 for which a CNC tool path is to be generated. The target region 350 is defined by a first tool path and a second tool path selected by the user 102 and explained in further detail below. In the illustrated embodiment, the lower camber surface 308 is selected as the target region 350, however it is understood that any other surface or portion of the CAD model 300 can be selected, including for example, the upper camber surface 309 and/or the roundover transition 314.

The target region 350 includes substantially parallel-oriented boundaries 352, 354 (also referred to as "parallel boundaries 352, 354") and substantially perpendicular-oriented boundaries 356, 358 (also referred to as "perpendicular boundaries 356, 358") which may conform to the shape of the lower camber surface 308. In some embodiments, the parallel boundaries 352, 354 and the perpendicular boundaries 356, 358 follow and substantially conform to an edge, or more generally to the shape of the surface of the CAD model 300. In the illustrated embodiment, the perpendicular boundaries 356, 358 are overlayed on the leading edge 310 and the trailing edge 312 respectively (due to selection of the first tool path and second tool path on the leading edge 310 and the trailing edge 312 respectively), and the parallel boundaries 352, 354 are overlayed on the first end 302 and the second end 306 respectively (due to selection of the first tool path and second tool path on the first end 302 and the second end 306 respectively).

It understood that the selection of the target region 350 can include any surface or feature of the CAD model 300, and that the defined target region 350 may be any portion of the selected surface and as such, is not intended to be limiting. By way of example, in the exemplary embodiment, the target region 350 may be defined by a portion of the leading edge 310, a portion of the trailing edge 312, the first end 302 and an arbitrary tool path 360 extending a distance from the first end 302, wherein the arbitrary tool path 360 may substantially conform to the contour of the lower camber surface 308. The identification and selection of the target region 350, as shown in FIG. 5, may be accomplished using input device 126 (e.g., by entering a series of mouse inputs or through the use of a haptic interface). The input location of the target region 350 may be displayed to the user on the CAD model 300 via media output component 124 (e.g., a computer screen).

In the exemplary embodiment, the leading edge 310 and the trailing edge 312 are generally oriented along an X-axis, and the first end 302 and second end 306 are generally oriented along a Z-axis. As described in further detail below, tool pathing may be applied either parallel to the X-axis or perpendicular to the X-axis. Thus, in the exemplary embodiment, a parallel tool path extends between the leading edge 310 and the trailing edge 312, and similarly a perpendicular tool path extends between the first end 302 and the second end 306. However, it is understood that the CAD model 300 can be arbitrarily oriented within the X-,Y-, or Z- axes.

As shown in FIG. 5, at least one first reference point 400 is initially selected on the lower camber surface 308 . In the exemplary embodiment, the reference point 400 is a distance D from one of the parallel boundaries 352, 354. In some embodiments, a second reference point 401 is also selected on the surface 308.

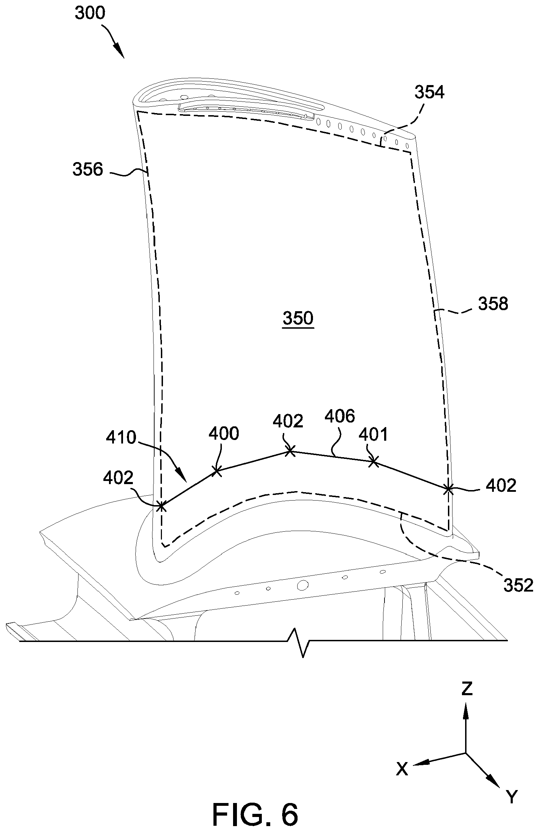

As shown in FIG. 6, a plurality of substantially equi-spaced reference points 402 (referred to as "generated reference points 402") can extend across the lower camber surface 308 between the perpendicular boundaries 356, 358. Each of the generated reference points 402 are approximately the same distance D as the first reference point 400 from the parallel boundaries 352, 354. As shown, generated reference points 402 are also positioned on the perpendicular boundaries 356, 358.

A parallel tool path 410 (also referred to as a "first parallel tool path 410") is then formed by connecting reference points 400, 401 and the generated reference points 402 together with straight lines 406, such that the parallel tool path 410 is generated from the cumulation of the plurality of line segments or lines 406. Each of the reference points 400, 402 are spaced apart by a length L. The length L is determined by the number of reference points 400, 402 per tool path 410 (points-per-tool-path). In some embodiments, the length L can be manually selected by the user 102. In some embodiments, a numerical value for points-per-tool-path is manually selected by the user 102. Selection of a shorter length L (and thus more generated reference points 402) facilitates producing a finer resolution and a more accurate approximation of the parallel tool path 410 across the lower camber surface 308 of the CAD model 300 and the target region 350. In some embodiments, to achieve an adequate resolution, a length L of about 1mm to about 2mm is selected by the user 102.

In some embodiments, the first tool path 410 is initially extended across the lower camber surface 308 and the generated reference points 402 are defined on the parallel tool path 410. The generated reference points 402 substantially conform to the surface area 172 of the CAD model 300 (depending on the numerical value for the points-per-tool-path) using any of a number of well-known mathematical projection techniques. For example, such techniques may include generating sets of points 402 along the curves, projecting the sets of points 402 on the lower camber surface 308 , and then re-splining through the points 402 to generate a new curve that lies close to the lower camber surface 308 and the 350. In another embodiment, the generated reference points 402 are initially spaced across the lower camber surface 308 and the parallel tool path 410 is defined using the points 402. The points 402 may be projected to the closest corresponding point on the lower camber surface 308, or they may be projected along a viewing direction or any other direction specified by the user 102.

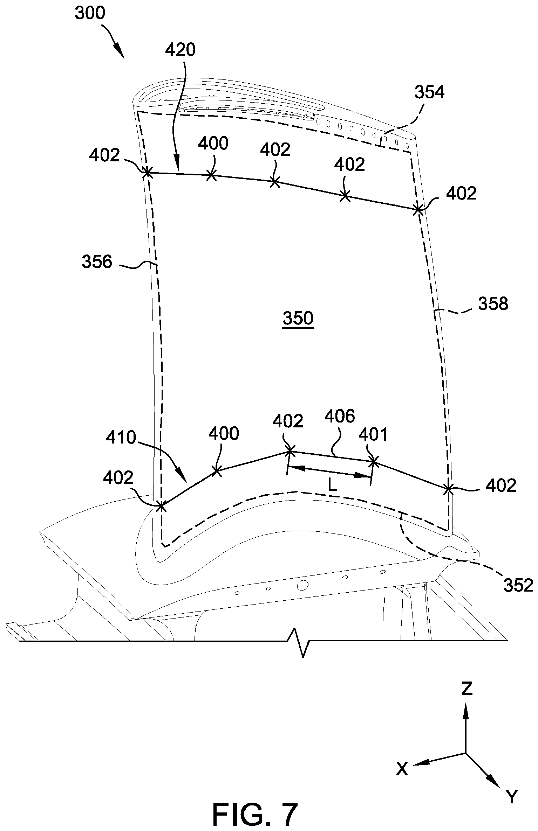

As shown in FIG. 7, in some embodiments, a second parallel tool path 420 is formed on the lower camber surface 308 in a manner similar to the formation of the first parallel tool path 410. In some embodiments, depending on the complexity of the 350, additional parallel tool paths may be selected and formed by the user 102. The first parallel tool path 410 and the second parallel tool path 420 define the target region 350 and boundaries of the target region 350.

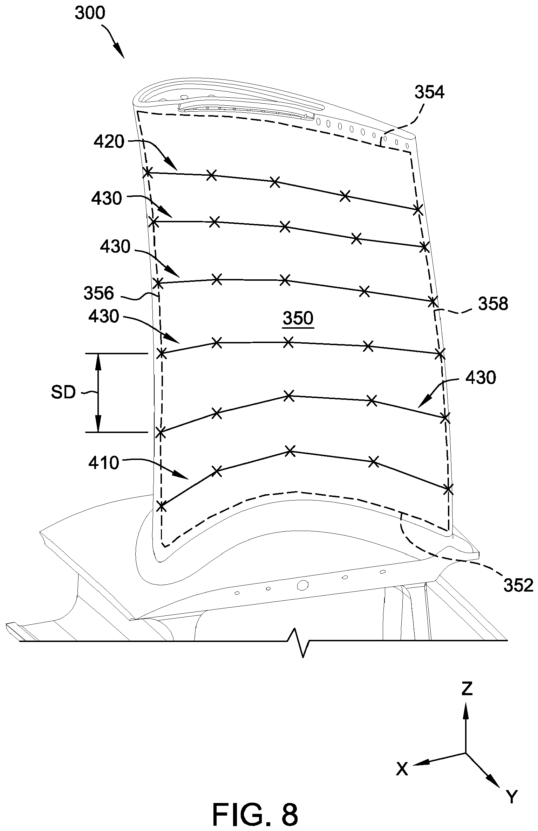

As shown in FIG. 8, multiple parallel tool paths 430 (also referred to as generated parallel tool paths 430) are generated, by the processor 120, across the lower camber surface 308. the parallel tool paths 430 are generated between the first parallel tool path 410 and second parallel tool path 420 and are substantially parallel to the first parallel tool path 410 and second parallel tool path 420. Each of the parallel tool paths 410, 420, 430 include generated reference points 402 that are substantially equi-spaced.-

The generated parallel tool paths 430 are interpolated by the processor 120 and the generated parallel tool paths 430 are separated by a step distance SD from one another. The step distance SD can be predefined by the user 102 to ensure that the plurality of parallel tool paths 430 substantially conform to the lower camber surface 308. The user 102 can preferably enter the step distance SD via input device 126, and the processor 120 can then determine the number of parallel tool paths 430 to sufficiently fit within the target region 350 and between the first parallel tool path 410 and the second parallel tool path 420. In some embodiments, to achieve an adequate resolution, a step distance SD of about 4mm to about 8mm is selected by the user 102. Each of the parallel tool paths 410, 420, 430 include a plurality of reference points equi-spaced apart by the length L.

The length L (as a result of the user-inputted points-per-tool-path) between reference points 402 of the first tool path 410 and the step distance SD between generated parallel tool paths 430 together determine a resolution for the tool paths. Smaller values for the length L and the step distance SD facilitates providing a finer resolution and a more accurate approximation of the tool paths 410, 420, 430 across the lower camber surface 308. Thus, the user 102 can preferably enter the resolution via the input device 126, and in response to the user selection, the processor 120 can determine the number of generated parallel tool paths 430 to sufficiently fit between the first parallel tool path 410 and the second parallel tool path 420.

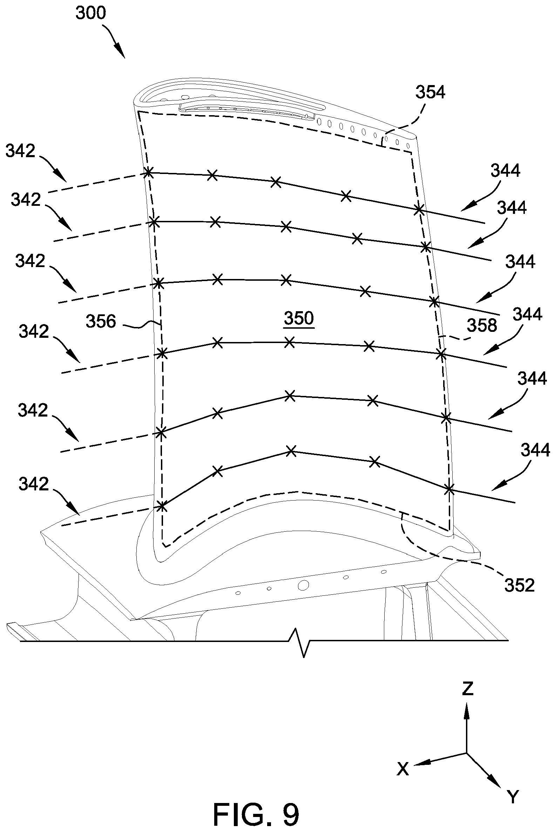

As shown in FIG. 9, approach tool paths 342 and retreat tool paths 344 can be generated tangentially to those reference points 402 spaced along the perpendicular boundaries 356, 358. The approach tool paths 342 enable the robot arm 112 to approach the work piece at the proper orientation. Similarly, the retreat tool paths 344 enable the robot arm 112 to leave the work piece at the proper orientation.

As shown in FIGS. 10 through 12, exemplary vertical paths 460 are generated in a manner similar to the formation of the parallel tool paths 410, 420, 430 (shown in FIGS. 6 through 8). In particular, a first perpendicular tool path 460 is generated on, or adjacent to, the perpendicular boundaries 356, 358 and in some embodiments, a second perpendicular tool path 470 is generated at, or adjacent to, the perpendicular boundaries 356, 358. In some embodiments, depending on the complexity of the lower camber surface 308, additional perpendicular tool paths may be selected and formed by the user 102.

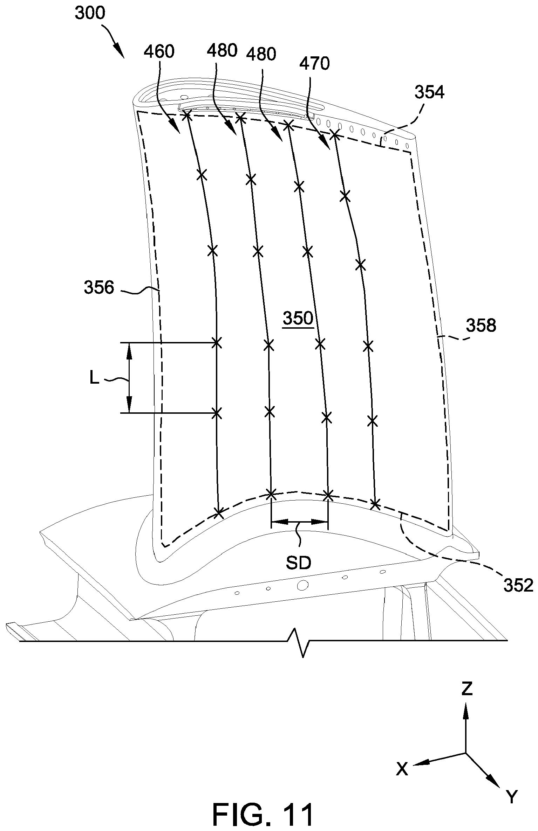

As shown in FIG. 11, multiple perpendicular tool paths 480 (also referred to as generated perpendicular tool paths 480) are generated, by the processor 120, across the lower camber surface 308. The perpendicular tool paths 480 are generated between the perpendicular boundaries 356, 358 and are substantially parallel to the first perpendicular tool path 460 and second perpendicular tool path 470. Each of the perpendicular tool paths 460, 470, and 480 include generated reference points 402 that are substantially equi-spaced.

The generated perpendicular tool paths 480 are interpolated by the processor 120 and the generated perpendicular tool paths 480 are separated by a step distance SD from one another. The step distance SD can be predefined by the user 102 to ensure that the plurality of perpendicular tool paths 460, 470, 480 substantially conform to the lower camber surface 308. The user 102 can preferably enter the step distance SD via input device 126, and the processor 120 can then determine the number of generated perpendicular tool paths 480 to sufficiently fit between the first perpendicular tool path 460 and second perpendicular tool path 470. In some embodiments, to achieve an adequate resolution, a step distance SD of about 4mm to about 8mm is selected by the user 102. Each of the perpendicular tool paths 460, 470, 480 include a plurality of reference points 402 equi-spaced apart by the length L.

The combination of the length L between reference points 402 of the first perpendicular tool path 460 and the step distance SD between generated perpendicular tool paths 480 determines a resolution for the tool paths. Generally selecting smaller values for the length L and the step distance SD facilitates providing a finer resolution and a more accurate approximation of the perpendicular tool paths 460, 470, 480 between the first perpendicular tool path 460 and second perpendicular tool path 470. Thus, the user 102 can preferably enter the resolution via the input device 126, and in response to the user selection, the processor 120 determines the number of generated perpendicular tool paths 480 to sufficiently fit within the 350.

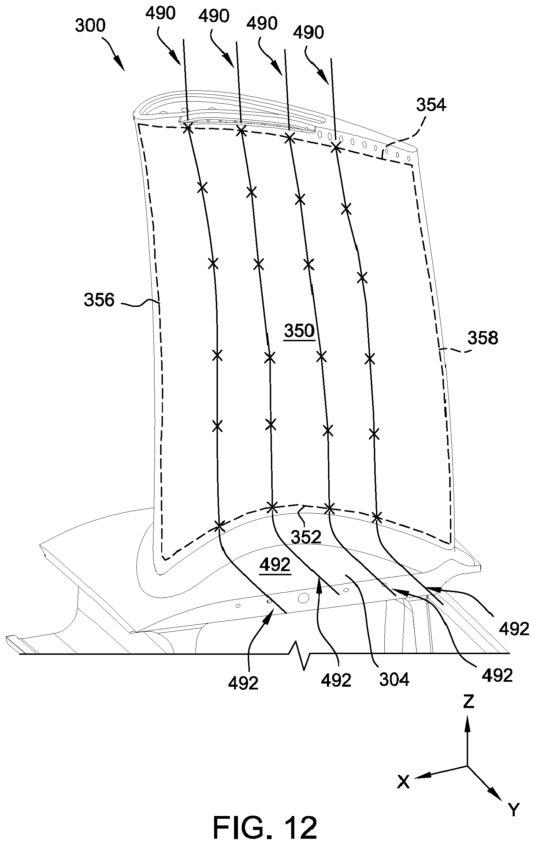

As shown in FIG. 12, approach tool paths 490 and retreat tool paths 492 can be generated tangentially to those reference points 402 spaced along the parallel boundaries 352, 354. The approach tool paths 342 enable the robot arm 112 to approach the work piece at the proper orientation. Similarly, the retreat tool paths 344 enable the robot arm 112 to leave the work piece at the proper orientation. In the exemplary embodiment, because the first end 302 extends from a base 304, the retreat tool paths 492 can substantially conform to the surface 307 of the base 1304 as shown.

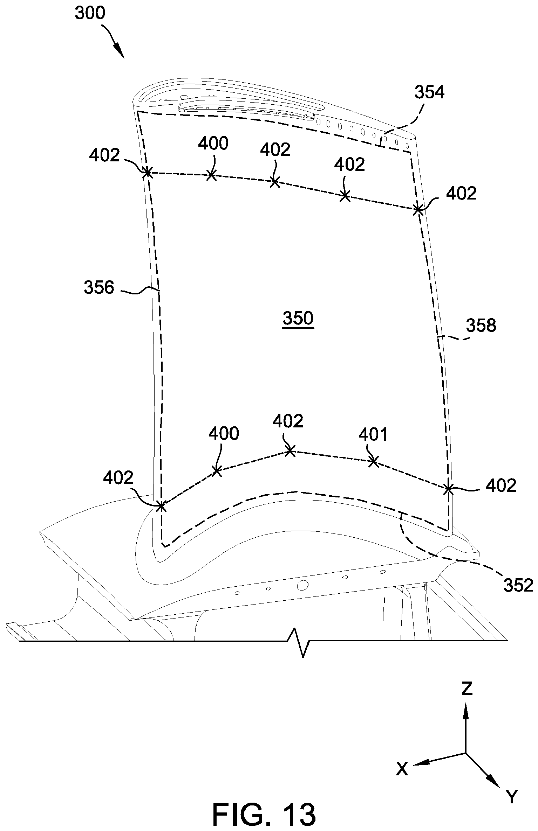

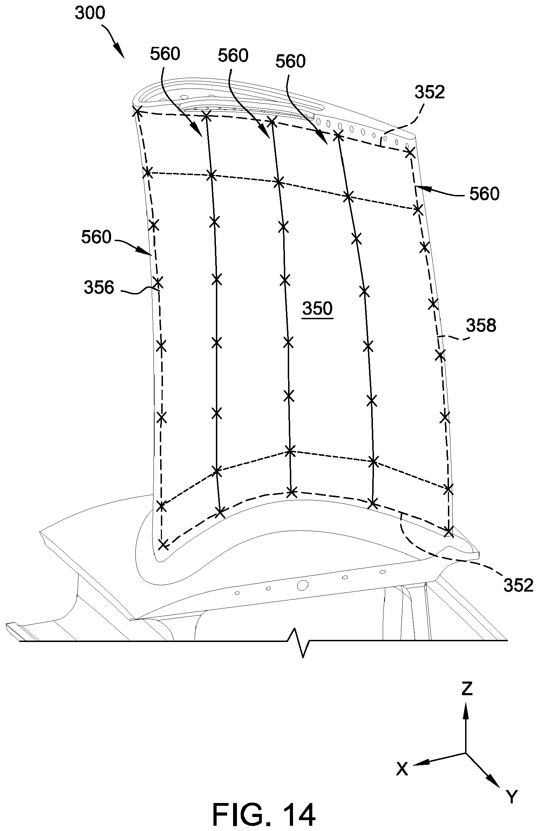

As shown in FIG. 13, the first parallel tool path 410 and the second parallel tool path 420 may be used in generating perpendicular tool paths. After the first parallel tool path 410 and the second parallel tool path 420 are selected and generated (as shown in FIG. 13), the parallel reference points (400, 401, 402) form perpendicular tool paths 560 (as shown in FIG. 14).

Embodiments of the disclosure provide an advantage over existing robotic platforms that do not have the capability to generate robot tool paths on surfaces of a CAD model having complex shapes. By defining at least one tool path through user input, the processor can interpolate generated tool paths between defined tool paths. In addition, the systems and methods described herein enable a user to select a desired resolution for the tool paths. The systems and methods described herein facilitate reducing the amount of manual user input in adequately covering a with tool paths.

In addition, the disclosed disclosure may be embodied in the form of computer-implemented processes and apparatuses for practicing those processes. The present, disclosure can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practicing the disclosure. The present disclosure can also be embodied in the form of computer program code, for example, whether stored in a storage medium, loaded into and/or executed by a computer, or as data signal transmitted whether a modulated carrier wave or not, over some transmission medium, such as over electrical wiring or cabling, through fiber optics, or via electromagnetic radiation, wherein, when the computer program code is loaded into and executed by a computer, the computer becomes an apparatus for practicing the disclosure. When implemented on a general-purpose microprocessor, the computer program code segments configure the microprocessor to create specific logic circuits.

The methods, systems, and compositions disclosed herein are not limited to the specific embodiments described herein, but rather, steps of the methods, elements of the systems, and/or elements of the compositions may be utilized independently and separately from other steps and/or elements described herein. For example, the methods, systems, and compositions are not limited to practice with only a rotary machine as described herein. Rather, the methods, systems, and compositions may be implemented and utilized in connection with many other applications.

Although specific features of various embodiments may be shown in some drawings and not in others, this is for convenience only. Moreover, references to "one embodiment" in the above description are not intended to be interpreted as excluding the existence of additional embodiments that also incorporate the recited features. In accordance with the principles of the disclosure, any feature of a drawing may be referenced and/or claimed in combination with any feature of any other drawing.

This written description uses examples, including the best mode, to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:

According to a first aspect, a method for generating tool paths across a surface of a computer aided design (CAD) model, the surface having a complex shape, the method includes: defining at least one reference point on the surface of the CAD model; generating a plurality of substantially equi-spaced reference points across the surface of the CAD model; connecting each of the reference points together with straight lines such that a first tool path is formed by a culmination of the straight lines; generating a second tool path across the surface of the CAD model; and, generating a plurality of intermediate tool paths that extend linearly between the first tool path and second tool path across the surface of a CAD model.

According to the previous aspect, the method further includes defining the first tool path and second tool path by selecting one or more of at least one corner of the surface of the CAD model, at least one edge of the surface of the CAD model, and points along a surface of the CAD model, wherein the first tool path and second tool path define at least one of substantially perpendicular oriented boundaries and substantially parallel oriented boundaries.

According to any previous aspect, the method further includes selecting a resolution of the first tool path.

According to any previous aspect, wherein selecting a resolution further includes selecting a desired length of the first tool path as defined by a length of the straight lines connected together.

According to any previous aspect, wherein selecting a resolution further includes selecting a desired points-per-tool-path value.

According to any previous aspect, the method further includes selecting a step distance of the intermediate tool paths prior to generating the plurality of intermediate tool paths, wherein the step distance is defined as a distance separating adjacent tool paths.

According to any previous aspect, the method further includes generating a plurality of parallel tool paths between the substantially parallel oriented boundaries.

According to any previous aspect, the method further includes generating a plurality of perpendicular tool paths between the substantially perpendicular oriented boundaries.

According to any previous aspect, the method further includes generating approach tool paths that extend tangentially to reference points positioned along one of substantially perpendicular oriented boundaries or substantially parallel oriented boundaries.

According to any previous aspect, the method further includes generating retreat tool paths that extend tangentially to reference points positioned along one of substantially perpendicular oriented boundaries and substantially parallel oriented boundaries.

According to any previous aspect, wherein the first tool path and the second tool path are parallel tool paths, each of the first tool path and the second tool path include parallel reference points, wherein the method further includes generating perpendicular tool paths from the parallel reference points of the first tool path and the second tool path.

According to a second aspect, a system for generating tool paths across a surface of a computer aided design (CAD) model, the surface having a complex shape, the system includes: a user input; a media output; and, a processor connected to the user input and media output, wherein in response to a user defining at least one reference point on the surface of the CAD model, the processor is programmed to: generate a plurality of substantially equi-spaced reference points across the surface of the CAD model; connect each of the reference points together with straight lines such that a first tool path is formed by a culmination of the straight lines; generate a second tool path across the surface of the CAD model; and, generate a plurality of intermediate tool paths that extend linearly between the first tool path and second tool path across the surface of a CAD model.

According to the previous aspect, wherein in response to generating the first tool path and the second tool path, the processor is programmed to define at least one of substantially perpendicular oriented boundaries and substantially parallel oriented boundaries.

According to any previous aspect, wherein in response to the user selecting a resolution of the first tool path, the processor is programmed to generate a number of reference points per tool path, the number of reference points per tool path corresponding to the selected resolution.

According to any previous aspect, wherein in response to the user selecting a step distance of the intermediate tool paths, the processor is programmed to interpolate a number of generated tool paths between the first tool path and the second tool path, each of the intermediate tool paths separated by the step distance.

According to any previous aspect, wherein the processor is programmed to generate a plurality of parallel tool paths between the substantially parallel oriented boundaries.

According to any previous aspect, wherein the processor is programmed to generate a plurality of perpendicular tool paths between the substantially perpendicular oriented boundaries.

According to a third aspect, a computer implemented method for generating tool paths across a surface of a computer aided design (CAD) model, the surface having a complex shape, the method includes: defining, by a user, at least one reference point on the surface of the CAD model; generating, by a processor, a plurality of substantially equi-spaced reference points across the surface of the CAD model; connecting, by the processor, each of the reference points together with straight lines such that a first tool path is formed by a culmination of the straight lines; generating, by the user, a second tool path across the surface of the CAD model; and, generating, by the processor, a plurality of intermediate tool paths that extend linearly between the first tool path and the second tool paths across the surface of a CAD model.

According to the previous aspect, the method further includes defining, by the processor, at least one of substantially perpendicular oriented boundaries and substantially parallel oriented boundaries in response to generating the first tool path and the second tool path.

According to any previous aspect, the method further includes selecting, by the user, a resolution of the first tool path; and, generating, by the processor, a number of reference points per tool path, the number corresponding to the resolution of the first tool path.

According to any previous aspect, the method further includes selecting, by the user, a step distance of the intermediate tool paths prior to by the processor, a plurality of intermediate tool paths, and, generating, by the processor, a number of generated tool paths across the surface of the CAD model, each of the generated tool paths separated by the step distance.

## Claims

1. A method for generating tool paths across a surface of a computer aided design (CAD) model, the surface having a complex shape, the method comprising:
defining at least one reference point on the surface of the CAD model;
generating a plurality of substantially equi-spaced reference points across the surface of the CAD model;
connecting each of the reference points together with straight lines such that a first tool path is formed by a culmination of the straight lines;
generating a second tool path across the surface of the CAD model; and,
generating a plurality of intermediate tool paths that extend linearly between the first tool path and second tool path across the surface of a CAD model.

2. The method of claim 1 further comprising defining the first tool path and second tool path by selecting one or more of at least one corner of the surface of the CAD model, at least one edge of the surface of the CAD model, and points along a surface of the CAD model, wherein the first tool path and second tool path define at least one of substantially perpendicular oriented boundaries and substantially parallel oriented boundaries.

3. The method of claim 2 further comprising selecting a resolution of the first tool path.

4. The method of claim 3, wherein selecting a resolution further comprises selecting a desired length of the first tool path as defined by a length of the straight lines connected together.

5. The method of claim 3, wherein selecting a resolution further comprises selecting a desired points-per-tool-path value.

6. The method of claim 2 further comprising selecting a step distance of the intermediate tool paths prior to generating the plurality of intermediate tool paths, wherein the step distance is defined as a distance separating adjacent tool paths.

7. The method of claim 6 further comprising generating a plurality of parallel tool paths between the substantially parallel oriented boundaries.

8. The method of claim 6 further comprising generating a plurality of perpendicular tool paths between the substantially perpendicular oriented boundaries.

9. The method of claim 2 further comprising generating approach tool paths that extend tangentially to reference points positioned along one of substantially perpendicular oriented boundaries or substantially parallel oriented boundaries.

10. The method of claim 2 further comprising generating retreat tool paths that extend tangentially to reference points positioned along one of substantially perpendicular oriented boundaries and substantially parallel oriented boundaries.

11. The method of claim 1, wherein the first tool path and the second tool path are parallel tool paths, each of the first tool path and the second tool path include parallel reference points, wherein the method further comprises generating perpendicular tool paths from the parallel reference points of the first tool path and the second tool path.

12. A system for generating tool paths across a surface of a computer aided design (CAD) model, the surface having a complex shape, the system comprising:
a user input;
a media output; and,
a processor connected to the user input and media output, wherein in response to a user defining at least one reference point on the surface of the CAD model, the processor is programmed to:
generate a plurality of substantially equi-spaced reference points across the surface of the CAD model;
connect each of the reference points together with straight lines such that a first tool path is formed by a culmination of the straight lines;
generate a second tool path across the surface of the CAD model; and,
generate a plurality of intermediate tool paths that extend linearly between the first tool path and second tool path across the surface of a CAD model.

13. A computer implemented method for generating tool paths across a surface of a computer aided design (CAD) model, the surface having a complex shape, the method comprising:
defining, by a user, at least one reference point on the surface of the CAD model;
generating, by a processor, a plurality of substantially equi-spaced reference points across the surface of the CAD model;
connecting, by the processor, each of the reference points together with straight lines such that a first tool path is formed by a culmination of the straight lines;
generating, by the user, a second tool path across the surface of the CAD model; and,
generating, by the processor, a plurality of intermediate tool paths that extend linearly between the first tool path and the second tool paths across the surface of a CAD model.

14. The method of claim 13 further comprising defining, by the processor, at least one of substantially perpendicular oriented boundaries and substantially parallel oriented boundaries in response to generating the first tool path and the second tool path.

15. The method of claim 13 further comprising:
selecting, by the user, a resolution of the first tool path; and,
generating, by the processor, a number of reference points per tool path, the number corresponding to the resolution of the first tool path.
